# EUROPEAN PATENT SPECIFICATION

(11) **EP 4 262 420 B1**
(45) Date of publication and mention of the grant of the patent: **26.11.2025**
(21) Application number: 21820628.2
(22) Date of filing: 06.12.2021
(51) Int. Cl.: A23F 5/04, A23N 12/08, A23N 12/12, B03C 3/017, B03C 3/09, G05B 15/00, B03C 3/011, B03C 3/019, B03C 3/02, B03C 3/08, B03C 3/12, B03C 3/36, B03C 3/41, B03C 3/47, B03C 3/68, B03C 3/78

(54) **METHOD TO ROAST COFFEE BEANS**
VERFAHREN ZUM RÖSTEN VON KAFFEEBOHNEN
PROCÉDÉ DE TORRÉFACTION DE GRAINS DE CAFÉ

(30) Priority: 18.12.2020 EP 20215329
(43) Date of publication of application: 25.10.2023
(73) Proprietor: Société des Produits Nestlé S.A., 1800 Vevey (CH)
(72) Inventor: MOREND, Joël, 1553 Châtonnaye (CH); DUBIEF, Flavien, Florent, 1424 CHAMPAGNE (CH); DEGREEF, Thomas, Rudi, S., 1850 Grimbergen (BE); CELIS, Michiel, Alexander, 9000 GHENT (BE); LEMMENS, Rien, Denise, M., 2530 BOECHOUT Antwerp (BE); BAEKELANDT, Maxime, 9000 Gent (BE)
(74) Representative: Ducreux, Marie
(86) International application number: PCT/EP2021/084442
(87) International publication number: WO 2022/128581

(56) References cited:
- EP-A1- 1 041 891
- WO-A1-2020/084134
- WO-A1-98/31974
- GB-A- 2 535 528
- US-A1- 2013 047 858
- US-A1- 2016 016 181

## Description

### Field of the invention

The present invention relates to a method to and a system for roasting coffee beans in a safe environment. The invention also relates to a computer program and a computer readable storage medium and is set out in the appended set of claims.

### Background of the invention

The roasting of coffee beans is a well-known process. The main steps consists in heating the beans to a desired roasting level and then cooling or quenching the heated beans to stop the roasting. During heating, smoke is emitted. This smoke contains safe and desired components all together, in particular the usual roasted coffee aroma, but also undesired less safe volatile organic compounds (VOC) VOC such as pyridine, 2-furane methanol, caffeine furfural, formaldehyde, acetaldehyde, ... and particulate matter (PM_{2.5}, PM₁₀), ... When roasting is implemented in manufacturing places producing important quantities of roasted beans, generally all the conditions for catching unsafe components are supplied. But, there is a recent trend to implement small batch roasting with small roasters in shops, restaurants and coffees where customers are able to consume coffee brewed from freshly roasted beans. The roaster does not only provide freshness and theater advantages, but also dispenses the pleasant roasted coffee aroma inside the shop or coffee. Relevant prior art systems and methods for roasting coffee beans are disclosed in WO 2020/084134 A1.

Yet, as mentioned above, harmful components are emitted too. When the roaster is used in a closed environment like a shop, coffee or restaurant, the emission of some components can become harmful depending on the size of the room, the ventilation of the room, ... For people working several hours in the room, smelling the smokes of the roaster can lead to a health problem.

As a result, in such an environment, it is recommended to stop the emission of smoke from the roaster to avoid any healthy issue for people present in the shop. The existing solutions consist in destroying contaminants, such as an afterburner enabling thermal oxidation of contaminants or a catalytic afterburner or retaining contaminants inside the apparatus like mechanical filters (metallic sieves or paper filter), an active carbon filter or an electrostatic precipitator or combination thereof.

An electrostatic precipitator catches some PM, usually with size comprised between 1.0 and 10 µm. The advantages of an electrostatic precipitator is its low cost of purchase and use, the absence of noise or heat generated during its use. Since, the electrostatic precipitator traps the contaminants that remain attached to the electrified cell of the electrostatic precipitator, the apparatus must be regularly cleaned.

An alert for cleaning can be set based on the maximal number of hours during which the roaster was operated or based on a maximal quantity of coffee beans that were roasted. But this alert is rather an estimation and is not fully accurate and may request the operator to clean the filter too late with the result of a lack of efficiency in filtering during the last roasting operations and not guaranteeing a safe environment for people around the roaster. In addition, the operator may disregard this alarm and go on roasting since the system of the roaster and the filter is still operable though not efficient in terms of filtering.

In particular, if the cleaning operation is not operated on time, a problem specific to electrostatic precipitators is the generation of breakdowns due to the presence of the particles inside the device. Although these breakdowns can be quite short, during the time they do happen, the smoke is not filtered with at least two undesired effects :
- first, particulate matters can be emitted in the room of the café, shop or restaurant where people are present,
- secondly, a part of non-filtered particulate matters can plug other filters positioned downstream the electrostatic precipitator, like an active carbon filter. As a result, VOCs are not filtered by this filter any longer which increases health issues inside the public room.
- finally, the electrostatic precipitator device can be damaged.

The risk these breakdowns happen can particularly increase when the electrostatic precipitator is reaching its limit of collection of particles, which happens when the operator has neglected an earlier cleaning alarm.

### Summary of the invention

An object of the invention is to address the above existing problems.

In particular, an object of the invention is to address the problem of informing the operator of the moment where it becomes absolutely necessary to clean the electrostatic precipitator smoke filter and to provide said information in an accurate manner.

It would be advantageous to avoid electrical breakdowns created by increasing fouling and to anticipate the moment of their occurrence. The invention is defined in the appended claims.

In a first aspect of the invention, there is provided a method to roast coffee beans in a roasting system, said system comprising :
- a roasting apparatus, and
- a smoke treating unit configured to treat the smoke produced by the roasting apparatus, said smoke treating unit comprising an electrostatic precipitator,
   - said electrostatic precipitator comprising at least one cell, and
   - said cell comprising ionization wires, collecting electrodes and repelling electrodes, and
   - said cell being supplied with an electrical power in order to apply a high voltage to the ionization wires and at least a part of the electrodes,
wherein, during each roasting operation implemented in the roasting apparatus, the method comprises the steps of :
- monitoring the voltage at the ionization wires and/or the voltage at the electrodes along the time of the roasting operation,
- comparing the monitored voltage to at least one pre-determined upper voltage threshold V1 and to one pre-determined lower voltage threshold V2, and
- if, during a period of time Δt of the roasting operation, the monitored voltage is inferior to said at least one pre-determined upper voltage threshold V1 while being superior to said pre-determined lower voltage threshold V2, then displaying a cleaning status requirement.

The method relates to the roasting of coffee beans by means of a system that comprises two apparatuses : first, the roasting apparatus in which beans are heated to be roasted and, secondly, the smoke treating unit configured to treat the smoke generated inside the first roasting apparatus during the roasting of the coffee beans.

The two apparatuses can be sub-parts of one single main system or alternatively, the two apparatuses can be conceived as separated modules cooperating together during the process of roasting.

Any type of roasting apparatus can be used. In the roasting apparatus, coffee beans are heated and preferably mixed to homogenise heating through the beans.

The source of heating can be a burner (meaning combustion) fed by natural gas, liquefied petroleum gas (LPG) or even wood. Alternatively the heat source can be an electrical resistor, a ceramic heater, a halogen source, a source of infrared or of microwaves. Preferably the source of heating is electrically powered so that the air contaminants produced during the roasting are contaminants generated from the heating of coffee beans themselves only and not from the burning of gases as it happens when the source of heating is a gas burner using natural gas, propane, liquefied petroleum gas (LPG) or even wood. The mixing of the beans during the roasting operation can be obtained with a fluidic bed of hot air or mechanically with stirring blades or a rotating drum.

Preferably the roasting apparatus is hot air fluid bed chamber. Within such a chamber, heated air is forced through a screen or a perforated plate under the coffee beans with sufficient force to lift the beans. Heat is transferred to the beans as they tumble and circulate within this fluidized bed.

Alternatively the roasting apparatus can be a drum chamber wherein the coffee beans are tumbled in a heated environment. The drum chamber can consist of a drum rotating along a horizontal axis or the drum chamber can comprise stirring blades to tumble the coffee beans in a heated environment.

The roasting apparatus comprises an outlet from which smoke produced during the roasting operation can be evacuated.

Generally, the smoke treating unit of the system comprises a smoke inlet configured to cooperate with this smoke outlet of the roasting apparatus and to collect smoke through this smoke inlet.

The smoke treating unit treats the smoke in order to reduce or eliminate harmful contaminants the smoke contains, in particular particulate matters such as PM₁, PM_{2.5} and PM₁₀.

This smoke treating unit comprises at least an electrostatic precipitator.

An electrostatic precipitator is a particulate collection device that filters a smoke by removing particles from the smoke stream using an electrostatic charge.

The electrostatic precipitator comprises one or more cells. Each cell is identical and comprises :
- ionization or corona metal wires in an upstream ionization area, and
- collecting electrodes and repelling electrodes in a downstream collecting area. Usually he electrodes presents the form of plates. An electrical field is generated through the electrodes and perpendicular to the flow of the smoke. This field is generated by applying different voltages to the electrodes of the couple or by applying a voltage to one electrode and connecting the other electrode to the ground. Several couples of a collecting plate and a repelling plate spaced apart from each other can be associated and allow the smoke to flow in the spaces there between.

Usually the ionization wires are supplied with electrical power in order to apply a high voltage V to the ionization wires. Particles of the smoke flowing through said ionization area become ionised that is charges either positively or negatively.

Then when the stream of smoke passes through the downstream metal plates, the collecting electrodes become a collector of ionised particles : the charged particles are attracted to and move towards the plates and form a layer that stays on the plates. The exiting smoke stream is thus cleaned from the charged particles that have collected on the collecting electrodes.

Electrostatic precipitators can be used to trap particles presenting size comprised between 1,0 and 10 µm.

If the electrostatic precipitator comprises several cells, these cells are positioned successively in the flow stream of smoke, the first cell filtering the majority of the particles of the smoke and the second cell filtering the smoke treated by the first cell to achieve an improved separation.

When a roasting operation is implemented in the roasting apparatus, the method comprises the steps of :
- monitoring the voltage at the ionization wires and/or the voltage at the electrodes along the time of the roasting operation,
- comparing the monitored voltage to at least one pre-determined upper voltage threshold V1 and to one pre-determined lower voltage threshold V2, and
- if, during a period of time Δt of the roasting operation, the monitored voltage is inferior to said at least one pre-determined upper voltage threshold V1 while being superior to said pre-determined lower voltage threshold V2, then displaying a cleaning status requirement.

It has been observed that during a roasting operation, the voltage V monitored at the ionization wires or at the electrodes varies and presents the general pattern of decreasing from an initial voltage V₀ (corresponding to the high voltage applied to the wires or the electrodes), then reaching a lowest value of voltage V_{low} and then increasing up from said lowest value to the initial voltage V₀ at the end of the roasting operation. Starting from a recently cleaned electrostatic precipitator and implementing several roasting operations, it has been observed that the value of the lowest voltage V_{low} becomes lower and lower at each roasting operation. In fact, this lowest value is a measurable parameter providing information about the level of collection of particles on the collecting electrodes.

When a part of the monitored voltage and in particular the lowest values become inferior to the voltage threshold, an alarm is displayed to draw the attention of the operator to the fact a cleaning operation is required.

Different upper voltage thresholds can be set which provides the operator with progressive types of information about the cleaning requirement and in particular about the urgency to clean.

This upper voltage threshold V1 can be pre-defined so that when a roasting operation is implemented and the monitored voltage is above said upper voltage threshold then roasting operations can be implemented without raising any alarm. But, when during one particular operation, the monitored voltage becomes inferior to said upper voltage threshold, it means that the risk that breakdowns occur during the implementations of future roasting operations is almost certain and that future operations cannot be implemented while reaching an efficient filtering of the smoke. Accordingly the method detects the moment a cleaning of the electrostatic precipitator is necessary.

The cleaning status requirement can provide different types of information from a simple suggestion to clean before a certain number of operations happen to an urgent cleaning at the end of the present rosting operation depending on the setting of the pre-determined upper voltage threshold V1 as developed below.

Usually the upper voltage threshold V1 is set in view of the high voltage applied to the ionization wires or the electrodes and further to experimentations as described below.

In one preferred embodiment, this upper threshold V1 represents more than 50 % of the value of the high voltage V₀ applied to the ionization wires or the electrodes.

During the use of electrostatic precipitators, it regularly happens that the voltage drops to a very low value due to the momentary presence of a particle establishing a contact between a repelling and a collecting electrode. The voltage falls extremely low at this moment before rising to the normal level when the particles are carried away in the flow of smoke.

These very low values of the voltage during a very brief time are not taken into account to analyze the status of dirtiness of the cell and, for this reason, according to the method, the monitored voltage is compared to one pre-determined lower voltage threshold V2 too and if the monitored voltage is inferior to said pre-determined lower voltage threshold V2, then there is no need to display a cleaning status requirement.

This pre-determined lower voltage threshold V2 can be set to eliminate false breakdowns and the low values of the monitored voltage during this phenomena must not be considered.

Usually the lower voltage threshold V2 depends on the electrostatic precipitator configuration, in particular on the applied high voltage, and can be determined further to experimentations. Usually this lower threshold is far inferior to the high voltage applied to the ionization wires and the electrodes and to the upper voltage threshold V₁. Usually the ratio of V1/V2 is superior to 10.

In one preferred embodiment, the lower pre-determined voltage threshold V₀ can be inferior to 100 V.

In particular, for a high voltage applied to the ionization wires or the electrodes that is superior to 5 kV, the lower pre-determined voltage threshold V₀ can be inferior to 100 V.

Preferably, the cleaning status requirement is displayed if :
- the monitored voltage is inferior to said at least one pre-determined upper voltage threshold V1 while being superior to said pre-determined lower voltage threshold V2,
   and
- the period of time Δt is superior to a pre-determined time threshold Δt1.

By providing a second condition about the length of the period Δt during which the monitored voltage is inferior to the pre-determined upper voltage threshold V1, momentaneous abnormal low values of voltage are not taken into account - even if they are superior to the pre-determined lower voltage threshold V2 - and then no cleaning status requirement is displayed.

Usually the period of time Δt1 is of about few seconds, for example of about 5 seconds.

In one embodiment, the cleaning status requirement can be displayed if the monitored voltage is inferior to said at least one pre-determined upper voltage threshold V1 while being superior to said pre-determined lower voltage threshold during more than one period of time Δt of the roasting operation.

In one embodiment, the steps of monitoring the voltage and comparing the monitored voltage can be implemented during a part of the time of the roasting operation only, preferably during the last 20 % of time of the roasting operation or during the part of the roasting operation where the temperature of the beans is superior to 150°C.

As mentioned above, it has been observed that during a roasting operation, the voltage V at the ionization wires and the electrodes varies and presents the general pattern of decreasing from an initial voltage V₀, then reaching a lowest value of voltage V_{low} and then increasing up from said lowest value to the initial voltage V₀ at the end of the roasting operation. It was observed too that the lowest values of the voltage are reached during the last part of the roasting operation (as illustrated in figures below). Accordingly, monitoring and comparing voltage during the last part of the roasting operation is sufficient to analyze the cleaning status requirement. This last part of the roasting operation can correspond also to a temperature of the beans superior to 150°C.

Usually the smoke treating unit comprises a high voltage process control board configured to control the electrostatic precipitator. Preferably, the monitored voltage can be read from said process control board.

In one preferred embodiment, the electrostatic precipitator comprises at least two cells, said cells being positioned successively one after the other along the flow of the smoke emitted by the roaster, and said method is applied at least on the first cell along the flow of the smoke, preferably on each cell.

It has been observed that within this preferred embodiment, the first cell traps about 90 % of the particulate matters of the smoke that the cell is configured to trap, meaning the following cell traps 90 % of the 10 % remaining particulate matters. As a consequence applying the present method to the first cell can be sufficient to detect the fouling and the risk of breakdowns for this cell.

Preferably the method is applied on each cell, meaning the voltage is monitored at each cell.

Preferably, the smoke treating unit comprises at least one other filtering device than the electrostatic precipitator. This other filtering device can be comprised in the list of : a high efficiency particulate accumulator filter, a metallic filter, an active carbon filter, paper filter, cotton, cloth. Optionally, the smoke treating unit can comprise additional filtering devices like wet-scrubbers, catalytic converters, afterburners.

Filters configured for trapping VOCs are preferably active carbon filter or charcoal filter.

Preferably, the smoke filtering sub-unit comprises successively, according to the direction of the flow of the smoke inside the smoke treating unit, at least one filter to remove particulate matters and then the electrostatic precipitator and then an active carbon filter. This order prevents the active carbon filter from being clogged by particulate matters.

The smoke is driven inside the smoke treating unit and the different filters by means of a smoke driver configured to circulate smoke through the smoke treating unit from the inlet to the outlet of the smoke treating unit. At the outlet, the treated flow can be safely released inside the atmosphere of a room since the smoke and the contaminants have been trapped. The smoke driver is generally a fan driving the smoke to the outlet.

Preferably the fan is positioned next to the outlet of the smoke treating unit. As a result, the fan is not contaminated by the non-treated smoke and its maintenance is easier.

According to one preferred embodiment, the smoke filtering sub-unit comprises at least successively :
- a metallic mesh, then
- the electrostatic precipitator, and then
- an active carbon filter according to the movement of the flow of the smoke inside the smoke treating unit.

Preferably within this embodiment, the active carbon filter is positioned physically above the electrostatic precipitator. Accordingly, the smoke is introduced upwardly through the successive devices.

In one embodiment, the value of the pre-determined upper voltage threshold V1 varies according to the number of roasting operations implemented since the last cleaning operation of the electrostatic operator, and preferably said value decreases with the increasing number of roasting operations.

Since the cell becomes more and more fouled at each roasting operation, counting the number of operations since the last cleaning operation of the cell provides a high level estimation of its fouling. Based on experimentations, the maximum number of roasting operations before the cell needs a cleaning can be estimated.

Based on that estimation, the value of the pre-determined upper voltage threshold V1 can decrease by steps and the upper voltage threshold can be set at values V₁₁, V12, V13 respectively when the number of roasting operations reaches corresponding pre-determined number of roasting operations N1, N2, N3 respectively.

The value can decrease by steps and at each step the value can correspond to a percentage of a maximal pre-determined upper voltage threshold.

In another embodiment, the system can comprise a meter configured to estimate the number of roasting operations still operable before the cleaning operation of the electrostatic precipitator is required, and the pre-determined upper voltage threshold V1 varies according to said estimated number, preferably said value decreases with the decreasing estimated number of roasting operations.

Such a meter can be configured to estimate the status of fouling of the cell of the electrostatic precipitator and to estimate the number of roasting operations still operable before a cleaning is required. This estimation can be based on the number of roasting operations already implemented and/or one the type of roasting operations already implemented and/or the type of beans roasted during the roasting operations already implemented.

In particular, can decrease by steps and the value of the pre-determined upper voltage threshold can be set at values V₁₁, V12, V13 respectively when the estimated number of roasting operations still implementable reaches corresponding pre-determined number of roasting operations N1, N2, N3 respectively.

When the value of the pre-determined upper voltage threshold V1 varies, preferably, depending on the value of the pre-determined upper voltage threshold V₁, a corresponding type of cleaning status requirement is able to be displayed.

In particular, as the value of the pre-determined upper voltage threshold V1 decreases, the cleaning status can evolve from a simple information or pre-warning to an urgent cleaning requirement alarm.

In one embodiment, the system comprises a sensor configured to measure particulate matters of the smoke treated by the electrostatic precipitator and the method comprises the steps of :
- measuring the concentration of particulate matters during a roasting operation,
- comparing the cleaning requirement status with the measure.

The sensor enables to confirm that the cleaning requirement status displayed on the basis of the analysis of the monitored voltage is correct.

In a second aspect, there is provided a system for roasting coffee beans, said system comprising :
- a roasting apparatus, and
- a smoke treating unit configured to treat the smoke produced by the roasting apparatus,
   said smoke treating unit comprising at least an electrostatic precipitator,
   said electrostatic precipitator comprising at least one cell, and
   said cell comprising ionization wires, collecting electrodes and repelling electrodes, and
   said cell being supplied with an electrical power in order to apply a high voltage to the ionization wires and at least a part of the electrodes, and
- a control system at the smoke treating unit, comprising a control unit, a memory unit, and a voltage sensor for the ionization electrode, said control system being configured to carry out the method of at least claim 1.

Depending on the integration of the roasting apparatus and the smoke treating unit, the control system can be shared between both apparatuses and the steps of the method can be shared between the control units of at least these two apparatuses.

In one embodiment, the method can be executed by the control unit of the roasting apparatus and by the control unit of the smoke treating unit, both control units communicating together. In particular:
- the control unit of the smoke treating unit can implement the steps of :
   - monitoring voltage V,
   - comparing said monitored voltage V with the upper and lower voltage thresholds, and
   - if necessary communicating the cleaning requirement status to the roasting apparatus,
- the control unit of the roasting apparatus can implement the step of displaying the cleaning requirement status.

In another embodiment,
- the control unit of the smoke treating unit can implement the steps of :
   - monitoring voltage V, and
   - communicating the values of said monitored voltage V to the roasting apparatus, and
- the control unit of the roasting apparatus can implement the steps of :
   - comparing said monitored voltage V with the upper and lower voltage thresholds,
   - if necessary displaying the cleaning requirement status.

In another embodiment, the control unit of smoke treating unit can implement all the steps after receiving information that a roasting step is starting from the roasting apparatus.

Preferably, the roasting apparatus can comprise a display unit in order to display the cleaning requirement status.

Alternatively, the electrostatic precipitator can comprise a device to display the cleaning requirement status such as a lighting button.

In another alternative, the control system can be configured to display the cleaning requirement status on a mobile device in communication with the system.

In a third aspect, there is provided a computer program comprising instructions to cause the above system according to the second aspect to perform the above method according to the first aspect.

In one embodiment, the computer program can be executed by the control unit of the roasting apparatus and by the control unit of the smoke treating unit, both control units communicating together. In particular:
- the control unit of the smoke treating unit can implement the steps of :
   - monitoring voltage V,
   - comparing said monitored voltage V with the upper and lower voltage thresholds, and
   - if necessary communicating the cleaning requirement status to the roasting apparatus,
- the control unit of the roasting apparatus can implement the step of displaying the cleaning requirement status.

In another embodiment,
- the control unit of the smoke treating unit can implement the steps of :
   - monitoring voltage V, and
   - communicating the values of said monitored voltage V to the roasting apparatus, and
- the control unit of the roasting apparatus can implement the steps of :
   - comparing said monitored voltage V with the upper and lower voltage thresholds, and
   - if necessary displaying the cleaning requirement status.

In another embodiment, the control unit of smoke treating unit can implement all the steps after receiving information that a roasting step is starting from the roasting apparatus.

In a fourth aspect, there is provided computer readable storage medium having stored thereon the above computer program according to the third aspect.

### Brief description of the drawings

Specific embodiments of the invention are now described further, by way of example, with reference to the following drawings in which :
- Figure 1 is a view of a system according to the present invention illustrating the path of the smoke through the system,
- Figure 2 illustrates one of the cell of the electrostatic precipitator part of the smoke treating unit of Figure 1,
- Figure 3 shows a block diagram of a control system of the system according to Figures 1 and 2,
- Figures 4 and 5 illustrate the evolution of monitored voltage and emitted particulates during roasting operations at two different status of fouling of the collecting electrodes,
- Figure 6 is a magnified view of one roasting operation illustrated in Figure 4.

### Detailed description of exemplary embodiments

### System for roasting

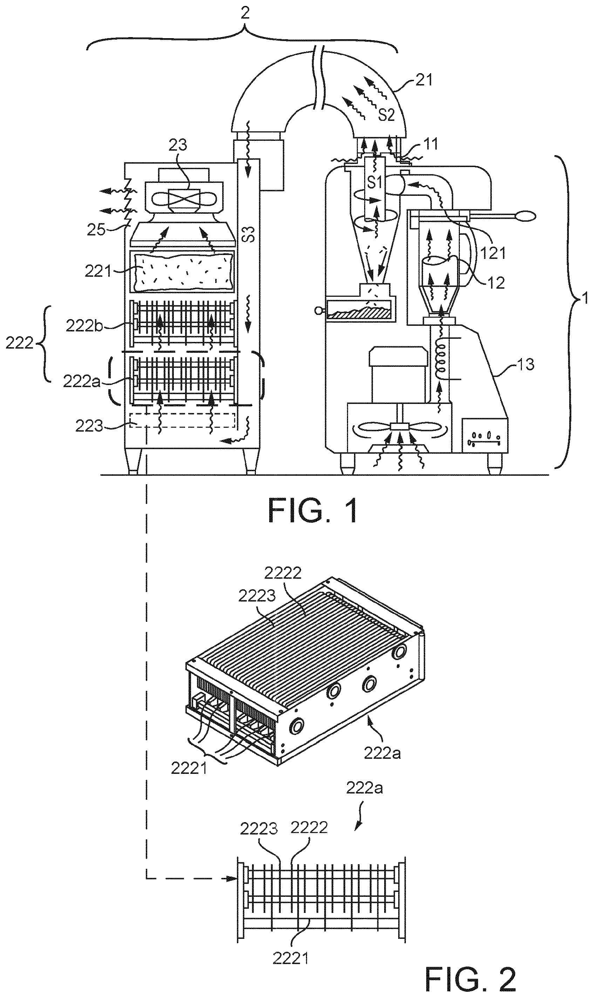

**Figure 1** shows an illustrative view of a system of a roasting apparatus 1 and a smoke treating unit 2. Functionally, the roasting apparatus is operable to roast coffee beans and the smoke treating unit is operable to treat the smoke generated during roasting by the roasting apparatus.

### Roasting apparatus

The roasting apparatus 1 is operable to receive and roast coffee beans inside a roasting chamber 12.

Preferably, the roasting apparatus 1 comprises a roasting chamber 12 in which a flow of hot air is introduced to agitate and heat the beans. The hot air flow is usually produced by an air flow driver and a heater. These devices are positioned below the roasting chamber and introduce the flow of hot air through the bottom of the chamber. In the illustrated figure, the bottom of the chamber is configured to enable air to pass through, specifically it can be a perforated plate on which the beans can lie and through which air can flow upwardly.

The air flow driver is operable to generate a flow of air upwardly in direction of the bottom of the vessel. The generated flow is configured to heat the beans and to agitate and lift the beans. As a result, the beans are homogenously heated. Specifically, the air flow driver can be a fan powered by a motor. Air inlets can be provided inside the base of the housing in order to feed air inside the housing, the air flow driver blowing this air in direction of the chamber 12.

The heater is operable to heat the flow of air generated by the air flow driver. Preferably, the heater is an electrical resistance positioned between the fan and the perforated plate with the result that the flow of air is heated before it enters the chamber 12 to heat and to lift the beans.

The heater and/or the fan are operable to apply a roasting profile to the beans, this roasting profile being defined as a curve of temperature against time.

Preferably, the roasting apparatus comprises a user interface 13 enabling :
- the input of information about the roasting, in particular the quantity of beans introduced inside the roasting chamber and the desired level of roasting, and the output of information about the roasting operation (status, temperature, time) and
- preferably about the output of information about the smoke treating unit 2 in particular about the cleaning of the electrostatic precipitator 222.

The roasting of the beans generates a smoke that is driven to the top opening 121 of the roasting chamber due to the flow of air generated by the air flow driver and as illustrated by arrow S1 in Figure 1.

Generally a chaff collector is in flow communication with the top opening 121 of the chamber to receive chaffs that have progressively separated from the beans during roasting and due to their light density are blown off to the chaff collector.

The rest of the smoke is evacuated through the smoke outlet 11 at the top of the roasting apparatus.

### Smoke treating unit

The smoke treating unit 2 is operable to receive and treat the smoke S1 emitted at the smoke outlet 11 of the roasting apparatus.

First, the smoke treating unit 2 comprises a smoke collecting device 21 adapted to collect the smoke. This smoke collecting device 21 or collecting device forms an internal void space or duct guiding the smoke (dotted lines S1, S2, S3) from the outlet 11 of the roasting apparatus in direction of the filtering devices of the smoke filtering sub-unit 22.

The smoke filtering sub-unit 22 comprises an electrostatic precipitator 222 adapted for filtering small particulate matter such as PM₁, PM_{2.5} and PM₁₀. This electrostatic precipitator 222 comprises two identical cells 222a, 222b, positioned successively one after the other in the flow of smoke.

**Figure 2** illustrates the main components of cell 222a. The cell 222a is configured to be traversed by the smoke and comprises successively according to the direction of the flow of smoke:
- several ionization wires 2221, and then
- several collecting electrodes 2222 and repelling electrodes 2223, usually in the form of parallel plates, positioned in an alternate manner in at a distance of few millimetres. The plates are oriented to create channels for the flow of smoke.

A high voltage level (in the range of 8 kV in this case) is applied on the ionization wires 2221 to create a corona discharge that charges the particles of the smoke entering the cell.

An electrical field is created by the collecting and repelling electrodes by applying a difference of voltage between the collecting and repelling electrodes (for example applying 4kV to the collecting electrodes and fitting the repelling electrodes to ground in this case). When the charged particles flow in the channels defined by the alternate collecting and repelling electrodes, these charges particles are attracted onto the collecting electrodes 2222 by the electric field which is perpendicular to the flow direction.

The cleaning operation of the electrostatic precipitator 222, consists in removing the cells 222a, 222b of the electrostatic precipitator from the smoke filtering unit and washing them with water and optionally with a detergent for example in a dishwasher.

In addition, in the particularly illustrated embodiment, the smoke filtering sub-unit 22 can comprise:
- a device 223 adapted for filtering large particulate matter like PM₁₀, for example a metallic mesh and an associated diffuser, generally a metallic grid positioned in front (that is upstream) of the mesh.
- an active carbon filter 221 adapted to remove VOCs from the smoke.

Preferably, the device for removing particulate matter are positioned upstream the active carbon filter. This upstream position guarantees that particulate matter do not foul the active carbon filter.

Physically, the electrostatic precipitator is positioned below the active carbon filter to avoid that particulates fall from the electrostatic precipitator on the active carbon filter when the electrostatic precipitator is switched off.

The smoke filtering sub-unit 22 comprises a smoke driver 23, generally a fan, for sucking the contaminated smoke from the inlet 211 of the collecting device through the smoke filtering sub-unit 22, where it is treated, to the outlet 25 of the smoke filtering sub-unit 22, where it is dispensed in ambient atmosphere safely.

### Control System of the system of the roasting apparatus and the smoke treating unit

With reference to **Figures 1, 2** **and** **3****,** the control system 3 will now be considered : the control system 3 is operable to control the smoke filtering unit 2 and in particular the electrostatic precipitator 222 of the smoke treating unit.

Depending on the level of integration of the roasting apparatus 1 and the smoke filtering unit 2, the control system can be shared between the control units of these two apparatuses :
- if the smoke treating unit 2 is part of the roasting apparatus 1, usually the control unit of the roasting apparatus is the master and the control unit of the filter is the slave.
- if the roasting apparatus 1 and the smoke treating unit 2 form two different apparatuses, each of them with its own independent control unit, then these control units can be configured to communicate to implement the method.

It may be possible to establish communication between the system of theses two apparatuses with a mobile device too, in particular to display information.

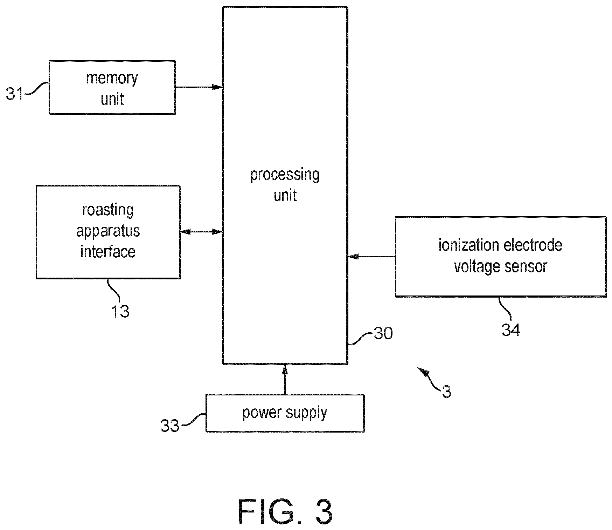

**Figure 3** illustrates the control system of the smoke filtering unit 2 of Figure 1.

The control system 3 typically comprises at a second level of smoke filtering unit 2 : a processing or control unit 30, a power supply 33, a memory unit 31, a voltage sensor 34 for the ionization electrode.

The control unit 30 is configured to output feedback to the user interface 13 of the roasting apparatus in particular to display a cleaning requirement status of the electrostatic precipitator. In an alternative configuration, the some treating unit 2 can comprise its own user interface to display this status, for example lighting buttons that can be lighted according to the status.

The control unit 30 may also display information to the user interface 13 about :
- cleaning instructions, like tutorials, historic data about cleaning operations, ...
- reset of the alarm status.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons. The user interface 20 can be formed as one unit or a plurality of discrete units.

A part of the user interface can also be on a mobile app when the apparatus is provided with a communication interface 32 as described below. In that case at least a part of input and output can be transmitted to the mobile device through the communication interface 32.

The control unit 30 generally comprises memory, input and output system components arranged as an integrated circuit, typically as a microprocessor or a microcontroller. The control unit 30 may comprise other suitable integrated circuits, such as : an ASIC, a programmable logic device such as a PAL, CPLD, FPGA, PSoC, a system on a chip (SoC), an analogue integrated circuit, such as a controller. For such devices, where appropriate, the aforementioned program code can be considered programmed logic or to additionally comprise programmed logic. The control unit 30 may also comprise one or more of the aforementioned integrated circuits. An example of the later is several integrated circuits arranged in communication with each other in a modular fashion e.g. a slave integrated circuit to control the smoke treating unit 2 in communication with a master integrated circuit to control the roasting apparatus 10.

The power supply 33 is operable to supply electrical energy to the said controlled components and the control unit 30. The power 33 may comprise various means, such as a battery or a unit to receive and condition a main electrical supply.

The control unit 30 generally comprises a memory unit 31 for storage of instructions as program code and optionally data. To this end the memory unit typically comprises : a nonvolatile memory e.g. EPROM, EEPROM or Flash for the storage of program code and operating parameters as instructions, volatile memory (RAM) for temporary data storage. The memory unit may comprise separate and/or integrated (e.g. on a die of the semiconductor) memory. For programmable logic devices the instructions can be stored as programmed logic.

The instructions stored on the memory unit 31 can be idealised as comprising a program to determine the level of dirtiness of the smoke treating unit of the system and in particular the cleaning status requirement (no cleaning necessary, urgent cleaning at the end of the present roasting operation, ...).

The control unit 30 is configured to output the value of the voltage V at the ionization wires 2221 and measured by a sensor 34. In a preferred embodiment, the voltage can be directly read from the high voltage PCB of the electrostatic precipitator.

During a roasting operation, the control system 3 is operable :
- to monitor the voltage at the ionization wires and/or the voltage at the electrodes along the time of the roasting operation,
- to compare the monitored voltage to a pre-determined upper voltage threshold V1 and to one pre-determined lower voltage threshold V2, and
- if, during a period of time Δt of the roasting operation, the monitored voltage is inferior to said pre-determined upper voltage threshold V1 while being superior to said pre-determined lower voltage threshold V2, then to display a cleaning status requirement.

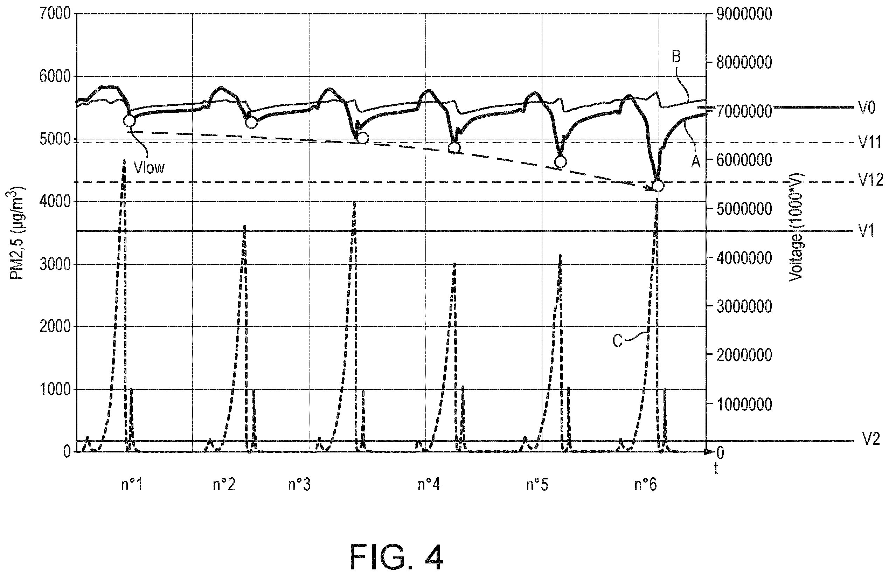

**Figure 4** illustrates the evolution of the emitted PMs and the monitored voltages during successive roasting operations (n°1 to 6).

Curve C illustrates the measure of PM_{2.5} emitted during the roasting operations and measured upstream the electrostatic precipitator (that is before treatment by this filtering device).

The voltage at the ionization wires 2221 of the upstream cell 222a, and the downstream cell 222b respectively, during these roasting operations is represented by curve A, and curve B respectively.

It is observed that during a roasting operation, the voltage V at the ionization wires varies and presents the general pattern of decreasing from an initial voltage V₀ (about 7 kV), then reaching a lowest value of voltage V_{low} (illustrated by black dots) and then increasing up from said lowest value to the initial voltage V₀ at the end of the roasting operation. Starting from a recently cleaned electrostatic precipitator and implementing several roasting operations, it has been observed that the value of the lowest voltage V_{low} becomes lower and lower at each roasting operation as illustrated by the dotted line. This lowest value is a measurable parameter providing information about the level of collection of particles on the collecting electrodes.

When a part of the monitored voltage, such as the lowest value V_{low}, becomes inferior to the upper voltage threshold V1 - that was set and is represented at 4,5 kV in Figure 4 - an alarm is displayed to draw the attention of the operator to the fact that a cleaning operation is required.

Through Curve B, it can be noticed that the monitored voltage of the other cell 222b does not decrease comparably. This is due to the fact that the upstream cell 222a traps about 90 % of the PMs. As a result the downstream cell 222b is not fouled as rapidly.

The upper voltage threshold V1 can be pre-defined through endurance tests during which roasting operations emitting the highest levels of PMs (that is preferably beans roasted to dark level) are repeated and the voltage is monitored. As operations are reiterated and the lowest values of voltage decrease, the appearance of first breakdowns reveals the deposit of very high levels of PMs in the plates. Since these breakdowns are not desired (PMs being dispensed in the room or blocking downstream active carbon filter if present), the upper voltage threshold V1 is defined so that, even if the voltage reaches this threshold during a roasting operation, then no breakdowns happen during said operation.

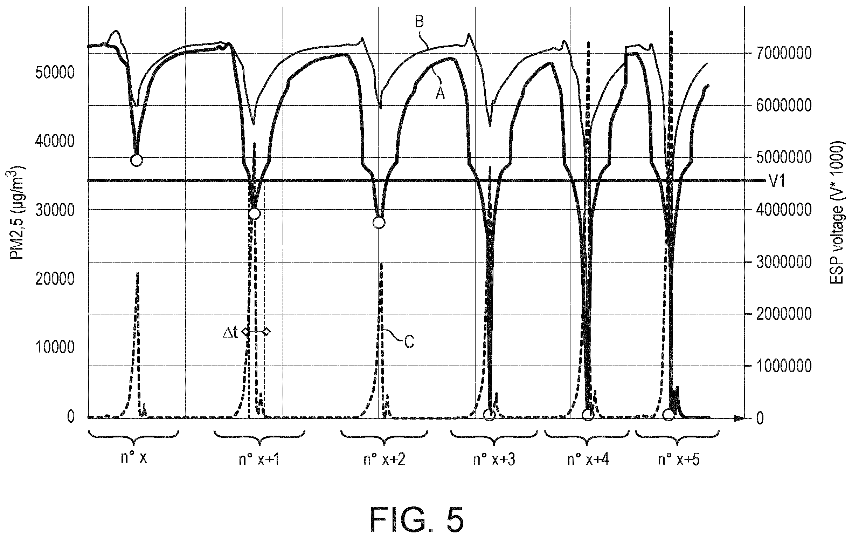

**Figure 5** illustrates the evolution of the emitted PMs and the monitored voltages during successive roasting operations identified as n°x to n°x+5 where the operation n°x+1 is the first operation during which the monitored voltage is inferior to the voltage threshold V1 set at 4,5 kV.

Like in Figure 4, Curve C illustrates the measure of PM_{2.5} emitted during the roasting operations and measured upstream the electrostatic precipitator and the voltage at the ionization wires 2221 of the upstream cell 222a, and the downstream cell 222b respectively, during these roasting operations is represented by curve A, and curve B respectively.

The curve A illustrates the situation where, between the roasting operation n°x and the two following operations n°x+1 and n°x+2, the monitored voltage of cell 222a becomes inferior to V1 during each roasting operation. During these both operations, no breakdown occurs and the filtering operation is still safe, but if further operations happen after the roasting operation n°x+2, it is noticed that during all the following roasting operation n°x+3 to n°x+5, the monitored voltage dips extremely low to values inferior to V1 which means that breakdowns systematically happen during these operations. Accordingly, in a safe manner, the upper threshold V1 is set at a voltage superior to the first lowest voltage observed with breakdown (that is 3,2 kV during operation n°x+3).

Through the analysis of curve B, it can be noticed that the second downstream cell still efficiently traps the PMs during the roasting operations n°x+1 to n°x+3 but that this second cell becomes rapidly fouled too and subject to breakdowns without capacity to filter the smoke. Accordingly, displaying an alarm urging the operator to clean the electrostatic precipitator immediately after the end of the roasting operation n°x+1 and the detection of the problem in the first upstream cell is highly preferable.

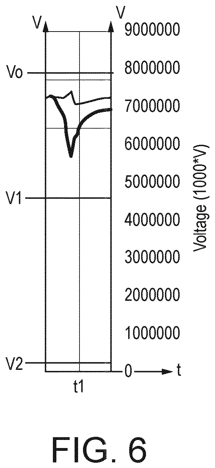

**Figure 6** is a magnified view of the roasting operation n°6 extracted from Figure 4. it makes apparent that, at time t1, the monitored voltage drops to a value almost equal to zero during a very short period. The value was inferior to 100 V and the period was inferior to 5 seconds. Such a low voltage corresponds to a false breakdown. It can be due to the short contact established by a particle between two electrodes and that almost immediately disappeared, the particle being carried away by the flow of smoke. This false breakdown does not provide information about the fouling of the cell of the electrostatic precipitator. Accordingly if the monitored voltage is inferior to the lower threshold V2, which itself is inferior to the upper threshold V1, no cleaning status requirement is displayed. The lower voltage threshold V2 can be set to about 100 V.

Experimentations of roasting operations with the system of the electrostatic precipitator and the roasting apparatus such as illustrated in Figures 4 and 5 enable the pre-determination of the value of the upper threshold V₁.

In addition, since the lowest voltage of the curves A and B progressively decreases, it is possible to define several pre-determined upper voltage threshold V₁₁, V₁₂, ... with V₁₁ > V₁₂ > V₁, such as illustrated in dotted lines in Figure 4, in order to progressively alert the operator with different cleaning status requirements becoming more and more alarming. For example, when the monitored voltage remains above the upper threshold V₁₁, a message can be displayed that more than N₁ roasting operations can be implemented before cleaning is required, N1 corresponding to 2/3 of the usual total number of operations possible with a cleaned cell. Then, when the monitored voltage is between the upper thresholds V12 and V11, a message can be displayed that between N1 and N2 roasting operations can be implemented before cleaning is required, N2 corresponding to 1/3 of the usual total number of operations possible with a cleaned cell.

Then, when the monitored voltage is between the upper thresholds V1 and V₁₂, a message can be displayed that less than N2 roasting operations can be implemented before cleaning is required.

Finally, when the monitored voltage is inferior to the upper threshold V₁, a message is displayed that cleaning must be operated before operating a new roasting.

Usually, the upper threshold V1 (or optionally pre-determined voltage threshold V₁₁, V₁₂, ...) is set in the setting menu of the roasting system based on these pre-determined experimentations. This threshold is stored in the memory 31 of the control unit 30. Based on this threshold, once the monitored becomes close to this threshold during one roasting operation, then an alarm for cleaning is displayed.

In general, when the upper threshold V1 is reached by the monitored voltage during a roasting operation, the alarm urges the operator to clean the electrostatic precipitator before any new roasting operation is implemented because breakdowns will systematically happen at the next roasting operations with the result that PMs filtering are not filtered.

This method is particularly useful when the operator forgets to clean the electrostatic precipitator although she/he has been already informed through the display of another alarm for cleaning for example an alarm based on the a number of hours of roasting operations. The new display for an urgent cleaning before next roasting operation urges her/him to act. This new display guarantees that, if the operator follows the recommendation of cleaning, no breakdowns of the electrostatic precipitator will happen during the next operations and the the public will remain in a safe environment around the roasting system.

During a roasting operation, the control system 3 is operable to display the cleaning status requirement if :
- during a period of time Δt of the roasting operation, the monitored voltage is inferior to said at least one pre-determined upper voltage threshold V1 while being superior to said pre-determined lower voltage threshold V2,
   and
- this period of time Δt is superior to a pre-determined time threshold Δt1. Preferably, this pre-determined time threshold Δt1 is about 5 seconds.

In Figure 5, it can be observed that during the roasting operation n°x+1, the monitored voltage of cell 222a is inferior to the threshold value V1 during a period of time Δt that is superior to 1 minute (actually, the scale of time in Figure 5 is such that one roasting operation lasts at least 15 minutes in Figure 5). Such a low voltage during such a long period of time cannot be considered as an isolated low value of the voltage and consequently this measured voltage is retained to initiate the display of a cleaning alarm.

If this period of time Δt had been very short, for example less than 5 seconds, then this measured voltage would not have been retained to initiate the display of a cleaning alarm. The fact of taking into account the length of the period of time Δt provides a more accurate cleaning requirement status.

In complementary method, the control system can be operable to:
- monitor the voltage at the ionization wires and/or to the voltage at the electrodes along the time of the roasting operation,
- calculate the moving average of the monitored voltage over the roasting operation,
- compare said calculate moving average with the pre-determined lower voltage threshold V₁, and
- if, during a period of time Δt of the roasting operation, the moving average is inferior to said pre-determined upper voltage threshold V₁, then to display a cleaning status requirement.

The calculation of the value of voltage with a moving average provides the advantage of smoothing fluctuations and excluding outliers over a number of measurement points, in particular the false breakdowns or the abnormal low values of voltage (inferior to V1) when they happen over a very short period of time.

Although the invention has been described with reference to the above illustrated embodiments, it will be appreciated that the invention as claimed is not limited in any way by these illustrated embodiments but it is defined by the appended claims.

Variations and modifications may be made without departing from the scope of the invention as defined in the claims.

**List of references in the drawings :**

| | |
|---|---|
| roasting apparatus | 1 |
| smoke outlet | 11 |
| roasting chamber | 12 |
| top outlet | 121 |
| user interface | 13 |
| smoke treating unit | 2 |
| smoke collecting device | 21 |
| smoke filtering sub-unit | 22 |
| active carbon filter | 221 |
| electrostatic precipitator | 222 |
| cell | 222a, 222b |
| ionisation electrode | 2221 |
| collecting plate | 2222 |
| repelling plate | 2223 |
| PM filter | 223 |
| smoke driver | 23 |
| outlet | 25 |
| control system | 3 |
| control unit | 30 |
| memory unit | 31 |
| cell electric current supply | 32 |
| power supply | 33 |
| ionization electrode voltage sensor | 34 |

## Claims

1. A method to roast coffee beans in a roasting system (10), said system comprising :
- a roasting apparatus (1), and
- a smoke treating unit (2) configured to treat the smoke produced by the roasting apparatus, said smoke treating unit comprising at least an electrostatic precipitator (222),
. said electrostatic precipitator comprising at least one cell (222a, 222b), and
. said cell comprising ionization wires (2221), collecting electrodes (2222) and repelling electrodes (2223), and
. said cell being supplied with an electrical power in order to apply a high voltage to the ionization wires and at least a part of the electrodes,
wherein, during each roasting operation implemented in the roasting apparatus, the method comprises the steps of :
- monitoring the voltage at the ionization wires and/or the voltage at the electrodes along the time of the roasting operation,
- comparing the monitored voltage to a pre-determined upper voltage threshold V1 and to one pre-determined lower voltage threshold V2, and
- if, during a period of time Δt of the roasting operation, the monitored voltage is inferior to said pre-determined upper voltage threshold V1 while being superior to said pre-determined lower voltage threshold V2, then displaying a cleaning status requirement.

2. Method according to Claim 1, wherein the ratio V1/V2 is superior to 10.

3. Method according to Claim 1 or 2, wherein the cleaning status requirement is displayed if :
- the monitored voltage is inferior to said at least one pre-determined upper voltage threshold V1 while being superior to said pre-determined lower voltage threshold V2,
and
- the period of time Δt is superior to a pre-determined time threshold Δt1.

4. Method according to the precedent claim, wherein the pre-determined time threshold Δt1 is inferior to 10 seconds, preferably of about 5 seconds.

5. Method according to Claim 1 or 2, wherein the cleaning status requirement is displayed if the monitored voltage is inferior to said at least one pre-determined upper voltage threshold V1 while being superior to said pre-determined lower voltage threshold during more than one period of time Δt of the roasting operation.

6. Method according to any one of the precedent claims, wherein the step of monitoring the voltage and the step of comparing the monitored voltage are implemented during a part of the time of the roasting operation only, preferably during the last 20 % of time of the roasting operation or during the part of the roasting operation where the temperature of the beans is superior to 150°C.

7. Method according to any one of the precedent claims, wherein the smoke treating unit comprises a high voltage process control board configured to control the electrostatic precipitator and wherein the monitored voltage is read from said process control board.

8. Method according to any one of the precedent claims, wherein the electrostatic precipitator comprises at least two cells (222a, 222b), said cells being positioned successively along the flow of the smoke emitted by the roaster, and wherein said method is applied at least on the first cell (222a) along the flow of the smoke.

9. Method according to any one of the precedent claims, wherein the value of the pre-determined upper voltage threshold V1 varies according to the number of roasting operations implemented since the last cleaning operation of the electrostatic precipitator, preferably said value decreases with the increasing number of roasting operations.

10. Method according to any one of the precedent claims, wherein the system comprises a meter configured to estimate the number of roasting operations still operable before the cleaning operation of the electrostatic precipitator is required, and the value of the pre-determined upper voltage threshold V1 varies according to said estimated number, preferably said value decreases with the decreasing estimated number of roasting operations.

11. Method according to Claim 9 or 10, wherein depending on the value of the pre-determined upper voltage threshold V₁, a corresponding type of cleaning status requirement is able to be displayed.

12. Method according to any one of the precedent claims, wherein the system comprises a sensor configured to measure particulate matters of the smoke treated by the electrostatic precipitator and the method comprises the steps of :
- measuring the concentration of particulate matters during a roasting operation,
- comparing the cleaning requirement status with said measured concentration.

13. A system (10) for roasting coffee beans, said system comprising :
- a roasting apparatus (1), and
- a smoke treating unit (2) configured to treat the smoke produced by the roasting apparatus, said smoke treating unit comprising at least an electrostatic precipitator (222),
said electrostatic precipitator comprising at least one cell (222a, 222b), and
said cell comprising ionization wires (2221), collecting electrodes (2222) and repelling electrodes (2223), and
said cell being supplied with an electrical power in order to apply a high voltage to the ionization wires and at least a part of the electrodes, and
- a control system (3) comprising a control unit (30) at the smoke treating unit (2), a memory unit (31) and a voltage sensor (34) for the ionization electrode, said control system being configured to carry out the method of roast of any one of Claims 1 to 12.

14. A computer program comprising instructions to cause the system of Claim 13 to perform the method of any one of Claims 1 to 12.

15. Computer program according to the precedent claim, wherein said computer program is executed by a control unit of the roasting apparatus (1) and the control unit (30) of the smoke treating unit (2), both control units communicating together.

16. A computer readable storage medium having stored thereon the computer program of Claim 14.

## Patentansprüche

1. Verfahren, um Kaffeebohnen in einem Röstsystem (10) zu rösten, das System umfassend:
- eine Rösteinrichtung (1) und
- eine Rauchbehandlungseinheit (2), die konfiguriert ist, um den durch die Rösteinrichtung erzeugten Rauch zu behandeln, die Rauchbehandlungseinheit umfassend mindestens einen elektrostatischen Abscheider (222),
. der elektrostatische Abscheider umfassend mindestens eine Zelle (222a, 222b) und
. die Zelle umfassend Ionisationsdrähte (2221), Sammelelektroden (2222) und Abstoßelektroden (2223) und
. wobei die Zelle mit einer elektrischen Leistung versorgt wird, um eine Hochspannung auf die Ionisationsdrähte und mindestens einen Teil der Elektroden anzuwenden,
wobei, während jedes in der Rösteinrichtung implementierten Röstvorgangs, das Verfahren die Schritte umfasst:
- Überwachen der Spannung an den Ionisationsdrähten und/oder der Spannung an den Elektroden im Laufe der Zeit des Röstvorgangs,
- Vergleichen der überwachten Spannung mit einer zuvor bestimmten oberen Spannungsschwelle V₁ und mit einer zuvor bestimmten unteren Spannungsschwelle V₂, und
- falls, während eines Zeitraums Δt des Röstvorgangs, die überwachte Spannung geringer als die zuvor bestimmte obere Spannungsschwelle V₁ ist, während sie höher als die zuvor bestimmte untere SpannungsschwelleV₂ ist, dann Anzeigen eines Reinigungsstatusbedarfs.

2. Verfahren nach Anspruch 1, wobei das Verhältnis V₁/V₂ höher als 10 ist.

3. Verfahren nach Anspruch 1 oder 2, wobei der Reinigungsstatusbedarf angezeigt wird, falls:
- die überwachte Spannung geringer als die mindestens eine zuvor bestimmte obere Spannungsschwelle V₁ ist, während sie höher als die zuvor bestimmte untere Spannungsschwelle V₂ ist,
und
- der Zeitraum Δt höher als eine zuvor bestimmte Zeitschwelle Δt₁ ist.

4. Verfahren nach dem vorstehenden Anspruch, wobei die zuvor bestimmte Zeitschwelle Δt₁ kleiner als 10 Sekunden, vorzugsweise etwa 5 Sekunden, ist.

5. Verfahren nach Anspruch 1 oder 2, wobei der Reinigungsstatusbedarf angezeigt wird, falls die überwachte Spannung geringer als die mindestens eine zuvor bestimmte obere Spannungsschwelle V₁ ist, während sie höher als die zuvor bestimmte untere Spannungsschwelle während mehr als einem Zeitraum Δt des Röstvorgangs ist.

6. Verfahren nach einem der vorstehenden Ansprüche, wobei der Schritt des Überwachens der Spannung und der Schritt des Vergleichens der überwachten Spannung nur während eines Teils der Zeit des Röstvorgangs implementiert werden, vorzugsweise während der letzten 20 % der Zeit des Röstvorgangs oder während des Teils des Röstvorgangs, wo die Temperatur der Bohnen höher als 150 °C ist.

7. Verfahren nach einem der vorstehenden Ansprüche, wobei die Rauchbehandlungseinheit eine Hochspannungsprozesssteuerplatine umfasst, die konfiguriert ist, um den elektrostatischen Abscheider zu steuern, und wobei die überwachte Spannung von der Prozesssteuerplatine abgelesen wird.

8. Verfahren nach einem der vorstehenden Ansprüche, wobei der elektrostatische Abscheider mindestens zwei Zellen (222a, 222b) umfasst, wobei die Zellen nacheinander entlang des durch den Röster ausgestoßenen Stroms des Rauchs positioniert sind und wobei das Verfahren mindestens auf die erste Zelle (222a) entlang des Stroms des Rauchs angewendet wird.

9. Verfahren nach einem der vorstehenden Ansprüche, wobei der Wert der zuvor bestimmten oberen Spannungsschwelle V₁ gemäß der Anzahl von seit dem letzten Reinigungsvorgang des elektrostatischen Abscheiders implementierten Röstvorgängen variiert, wobei der Wert vorzugsweise mit der zunehmenden Anzahl von Röstvorgängen abnimmt.

10. Verfahren nach einem der vorstehenden Ansprüche, wobei das System ein Messinstrument umfasst, das konfiguriert ist, um die Anzahl von noch verfügbaren Röstvorgängen zu schätzen, bevor der Reinigungsvorgang des elektrostatischen Abscheiders erforderlich ist, und der Wert der zuvor bestimmten oberen Spannungsschwelle V₁ gemäß der geschätzten Anzahl variiert, wobei der Wert vorzugsweise mit der abnehmenden geschätzten Anzahl von Röstvorgängen abnimmt.

11. Verfahren nach Anspruch 9 oder 10, wobei, abhängig von dem Wert der zuvor bestimmten oberen Spannungsschwelle V₁, eine entsprechende Art des Reinigungsstatusbedarfs angezeigt werden kann.

12. Verfahren nach einem der vorstehenden Ansprüche, wobei das System einen Sensor umfasst, der konfiguriert ist, um Feinstaub des durch den elektrostatischen Abscheider behandelten Rauchs zu messen, und das Verfahren die Schritte umfasst:
- Messen der Feinstaubkonzentration während eines Röstvorgangs,
- Vergleichen des Reinigungsbedarfsstatus mit der gemessenen Konzentration.

13. System (10) zum Rösten von Kaffeebohnen, das System umfassend:
- eine Rösteinrichtung (1) und
- eine Rauchbehandlungseinheit (2), die konfiguriert ist, um den durch die Rösteinrichtung erzeugten Rauch zu behandeln, die Rauchbehandlungseinheit umfassend mindestens einen elektrostatischen Abscheider (222),
der elektrostatische Abscheider umfassend mindestens eine Zelle (222a, 222b) und
die Zelle umfassend Ionisationsdrähte (2221), Sammelelektroden (2222) und Abstoßelektroden (2223) und
wobei die Zelle mit einer elektrischen Leistung versorgt wird, um eine Hochspannung auf die Ionisationsdrähte und mindestens einen Teil der Elektroden anzuwenden, und
- ein Steuersystem (3), umfassend eine Steuereinheit (30) an der Rauchbehandlungseinheit (2), eine Speichereinheit (31) und einen Spannungssensor (34) für die Ionisationselektrode, wobei das Steuersystem konfiguriert ist, um das Röstverfahren nach einem der Ansprüche 1 bis 12 vorzunehmen.

14. Computerprogramm, umfassend Anweisungen, um das System nach Anspruch 13 zu veranlassen, das Verfahren nach einem der Ansprüche 1 bis 12 durchzuführen.

15. Computerprogramm nach dem vorstehenden Anspruch, wobei das Computerprogramm durch eine Steuereinheit der Rösteinrichtung (1) und die Steuereinheit (30) der Rauchbehandlungseinheit (2) ausgeführt wird, wobei beide Steuereinheiten miteinander kommunizieren.

16. Computerlesbares Speicherungsmedium, das das Computerprogramm nach Anspruch 14 darauf gespeichert aufweist.

## Revendications

1. Procédé de torréfaction de grains de café dans un système de torréfaction (10), ledit système comprenant :
- un appareil de torréfaction (1), et
- une unité de traitement de fumée (2) configurée pour traiter la fumée produite par l'appareil de torréfaction, ladite unité de traitement de fumée comprenant au moins un électrofiltre (222),
. ledit électrofiltre comprenant au moins une cellule (222a, 222b), et
. ladite cellule comprenant des fils d'ionisation (2221), des électrodes collectrices (2222) et des électrodes répulsives (2223), et
. ladite cellule étant alimentée en électricité afin d'appliquer une haute tension aux fils d'ionisation et à au moins une partie des électrodes,
dans lequel, au cours d'une opération de torréfaction mise en œuvre dans l'appareil de torréfaction, le procédé comprend les étapes consistant à :
- commander la tension au niveau des fils d'ionisation et/ou la tension au niveau des électrodes pendant toute la durée de l'opération de torréfaction,
- comparer la tension surveillée à un seuil de tension supérieur prédéterminé V₁ et à un seuil de tension inférieur prédéterminé V₂, et
- si, pendant une période Δt de l'opération de torréfaction, la tension surveillée est inférieure audit seuil de tension supérieur prédéterminé V₁ tout en étant supérieure audit seuil de tension inférieur prédéterminé V₂, afficher alors une exigence d'état de nettoyage.

2. Procédé selon la revendication 1, dans lequel le rapport V₁/V₂ est supérieur à 10.

3. Procédé selon la revendication 1 ou 2, dans lequel l'exigence d'état de nettoyage est affichée si :
- la tension surveillée est inférieure audit au moins un seuil de tension supérieur prédéterminé V₁ tout en étant supérieure audit seuil de tension inférieur prédéterminé V₂,
et
- la période de temps Δt est supérieure à un seuil de temps prédéterminé Δt₁.

4. Procédé selon la revendication précédente, dans lequel le seuil de temps prédéterminé Δt₁ est inférieur à 10 secondes, de préférence d'environ 5 secondes.

5. Procédé selon la revendication 1 ou 2, dans lequel l'exigence d'état de nettoyage est affichée si la tension surveillée est inférieure audit au moins un seuil de tension supérieur prédéterminé V₁ tout en étant supérieure audit seuil de tension inférieur prédéterminé pendant plus d'une période de temps Δt de l'opération de torréfaction.

6. Procédé selon l'une quelconque des revendications précédentes, dans lequel l'étape de surveillance de la tension et l'étape de comparaison de la tension surveillée sont mises en œuvre pendant une partie seulement de la durée de l'opération de torréfaction, de préférence pendant les derniers 20 % de la durée de l'opération de torréfaction ou pendant la partie de l'opération de torréfaction où la température des grains est supérieure à 150 °C.

7. Procédé selon l'une quelconque des revendications précédentes, dans lequel l'unité de traitement de fumée comprend une carte de commande de processus à haute tension configurée pour commande l'électrofiltre et dans lequel la tension surveillée est lue à partir de ladite carte de commande de processus.

8. Procédé selon l'une quelconque des revendications précédentes, dans lequel l'électrofiltre comprend au moins deux cellules (222a, 222b), lesdites cellules étant positionnées successivement le long du flux de la fumée émise par le torréfacteur, et dans lequel ledit procédé est appliqué au moins sur la première cellule (222a) le long du flux de la fumée.

9. Procédé selon l'une quelconque des revendications précédentes, dans lequel la valeur du seuil de tension supérieur prédéterminé V₁ varie en selon le nombre d'opérations de torréfaction mises en œuvre depuis la dernière opération de nettoyage de l'électrofiltre, de préférence ladite valeur diminue avec l'augmentation du nombre d'opérations de torréfaction.

10. Procédé selon l'une quelconque des revendications précédentes, dans lequel le système comprend un compteur configuré pour estimer le nombre d'opérations de torréfaction encore possibles avant que l'opération de nettoyage de l'électrofiltre ne soit nécessaire, et la valeur du seuil de tension supérieur prédéterminé V₁ varie selon ledit nombre estimé, de préférence ladite valeur diminue avec la baisse du nombre estimé d'opérations de torréfaction.

11. Procédé selon la revendication 9 ou 10, dans lequel, en fonction de la valeur du seuil de tension supérieur prédéterminé V₁, un type correspondant d'exigence d'état de nettoyage peut être affiché.

12. Procédé selon l'une quelconque des revendications précédentes, dans lequel le système comprend un capteur configuré pour mesurer les matières particulaires de la fumée traitée par l'électrofiltre et le procédé comprend les étapes consistant à :
- mesurer la concentration de matières particulaires au cours d'une opération de torréfaction,
- comparer l'état des besoins en nettoyage avec la concentration mesurée.

13. Système (10) permettant de torréfier des grains de café, ledit système comprenant :
- un appareil de torréfaction (1), et
- une unité de traitement de fumée (2) configurée pour traiter la fumée produite par l'appareil de torréfaction, ladite unité de traitement de fumée comprenant au moins un électrofiltre (222),
ledit électrofiltre comprenant au moins une cellule (222a, 222b), et
ladite cellule comprenant des fils d'ionisation (2221), des électrodes collectrices (2222) et des électrodes répulsives (2223), et
ladite cellule étant alimentée en électricité afin d'appliquer une haute tension aux fils d'ionisation et à au moins une partie des électrodes, et
- un système de commande (3) comprenant une unité de commande (30) au niveau de l'unité de traitement de fumée (2), une unité de mémoire (31) et un capteur de tension (34) pour l'électrode d'ionisation, ledit système de commande étant configuré pour réaliser le procédé de torréfaction selon l'une quelconque des revendications 1 à 12.

14. Programme informatique comprenant des instructions pour amener le système selon la revendication 13 à réaliser le procédé selon l'une quelconque des revendications 1 à 12.

15. Programme informatique selon la revendication précédente, dans lequel ledit programme informatique est exécuté par l'unité de commande de l'appareil de torréfaction (1) et l'unité de commande (30) de l'unité de traitement de fumée (2), les deux unités de commande communiquant ensemble.

16. Support de stockage lisible par ordinateur sur lequel est stocké le programme informatique selon la revendication 14.
